(19) **Europäisches Patentamt**

**European Patent Office**

**Office européen des brevets**

(11) Veröffentlichungsnummer: **0 326 951**
**A2**

(12) **EUROPÄISCHE PATENTANMELDUNG**

(21) Anmeldenummer: 89101378.1

(22) Anmeldetag: 27.01.89

(51) Int. Cl.⁴: **G05B 19/04**

(30) Priorität: 03.02.88 DE 3803102

(43) Veröffentlichungstag der Anmeldung:
09.08.89 Patentblatt 89/32

(84) Benannte Vertragsstaaten:
**BE DE GB IT NL SE**

(71) Anmelder: **Hartmann & Braun**
**Aktiengesellschaft**
**Gräfstrasse 97**
**D-6000 Frankfurt am Main 90(DE)**

(72) Erfinder: **Pässler, Hans-Joachim**
**Hörsterstrasse 114b**
**D-4800 Bielefeld 18(DE)**

(54) **Analogwertspeicher mit einem Vorwärts-Rückwärts-Zähler und einem diesem nachgeschalteten Digital-Analog-Wandler.**

(57) Das Ausgangssignal eines Analogwertspeichers, der z. B. den Stellungssollwert für einen analogen Stellungsregler liefert, soll einerseits genau einstellbar sein, andererseits soll die für eine Verstellung des Ausgangssignals über einen großen Bereich erforderliche Zeit möglichst klein sein. Bei einer großen Verstellgeschwindigkeit für das Ausgangssignal ist aber keine genaue Einstellung des Ausgangssignals möglich.

Die dem Takteingang (15t) eines Vorwärts-Rückwärts-Zählers (15) zugeführte Zählfrequenz ($f_1$) vergrößert sich bei jeder Betätigung der Handsteuertasten (12, 13) für die Verstellung des Ausgangssignals ($y_{soll}$) des Analogwertspeichers (1), ausgehend von einem Anfangswert ($f_{1min}$), entsprechend der Dauer der Betätigung der Handsteuertasten (12, 13) zeitlinear bis zu einem Maximalwert ($f_{1max}$). Die Veränderung der dem Vorwärts-Rückwärts-Zähler (15) zugeführten Zählfrequenz ($f_1$) erfolgt über einen zweiten von einer festen Zählfrequenz ($f_0$) beaufschlagten Zähler (19), dem ein weiterer Digital-Analog-Wandler (20) und ein Spannungs-Frequenz-Wandler (18) nachgeschaltet sind.

Der Analogwertspeicher eignet sich insbesondere für die inkrementale Verstellung des analogen Stellungssollwertes eines analogen Stellungsreglers mit Rückmeldung des Stellungsistwertes in eine Warte.

Fig. 2

## Analogwertspeicher mit einem Vorwärts-Rückwärts-Zähler und einem diesem nachgeschalteten Digital-Analog-Wandler

Die Erfindung bezieht sich auf einen Analogwertspeicher mit einem Vorwärts-Rückwärts-Zähler und einem diesem nachgeschalteten Digital-Analog-Wandler, dessen Ausgangssignal das Ausgangssignal des Analogwertspeichers ist, gemäß dem Oberbegriff des Patentanspruchs.

Ein derartiger Analogwertspeicher ist aus der DE-PS 26 33 102 bekannt. In der DE-PS 26 33 102 ist anhand der Figur 3 ein Analogwertspeicher mit einem Vorwärts-Rückwärts-Zähler und einem diesem nachgeschalteten Digital-Analog-Wandler beschrieben, der als Speicher für das Ausgangssignal eines elektrischen Reglers dient. Während des Automatikbetriebs des Reglers ist dem Vorwärts-Rückwärts-Zähler des Analogwertspeichers die Differenz zwischen dem Reglerausgangssignal und dem Ausgangssignal des Digital-Analog-Wandlers als Vorzeichensignal für die Zählrichtung zugeführt. Gleichzeitig ist dem Zähleingang des Vorwärts-Rückwärts-Zählers eine erste Taktfrequenz zugeführt. Diese Taktfrequenz ist groß gewählt, um eine möglichst schnelle, selbsttätig ablaufende Angleichung des Ausgangssignals des Analogwertspeichers an das Regler-Ausgangssignal zu erreichen. Während des Handbetriebs des Reglers ist dem Zähleingang des Vorwärts-Rückwärts-Zählers eine zweite Taktfrequenz zugeführt, die wesentlich kleiner als die erste Taktfrequenz gewählt ist, um eine feinfühlige Verstellung eines dem Analogwertspeicher nachgeschalteten Stellglieds während des Handbetriebs zu gewährleisten. Beim Umschalten von Automatikbetrieb auf Handbetrieb bleibt der Vorwärts-Rückwärts-Zähler stehen. Das Ausgangssignal des Vorwärts-Rückwärts-Zählers und damit auch das Ausgangssignal des Analogwertspeichers ändert sich erst wieder, wenn durch Betätigung eines Umschalters mit neutraler Mittelstellung dem Vorzeicheneingang des Vorwärts-Rückwärts-Zählers eine positive oder eine negative Spannung zugeführt wird. Dabei hängt die Zählrichtung von der Polarität der dem Vorzeicheneingang zugeführten Spannung ab, während die Zählgeschwindigkeit nur von der dem Zähleingang zugeführten Taktfrequenz abhängt.

Die Verstellung des dem Analogwertspeicher nachgeschalteten Stellglieds soll einerseits möglichst schnell erfolgen, andererseits soll das Stellglied möglichst genau positioniert werden können. Um die erste Forderung erfüllen zu können, ist eine große Taktfrequenz erforderlich. Bei der sich aufgrund der großen Taktfrequenz ergebenden hohen Vestellgeschwindigkeit des Stellglieds ist u. a. wegen des Nachlaufs des Stellglieds nur eine ungenaue Positionierung des Stellglieds möglich. Um die Forderung nach einer genauen Positionierung des Stellglieds erfüllen zu können, ist eine kleine Taktfrequenz erforderlich. Dann ist die Verstellgeschwindigkeit für einen großen Stellbereich jedoch zu langsam.

Der Erfindung liegt die Aufgabe zugrunde, einen Analogwertspeicher der eingangs genannten Art zu schaffen, der die Feinpositionierung eines Stellgliedes mit Rückmeldung des Stellungsistwertes bei möglichst kleiner Verstellzeit für den Gesamtwert des Verstellbereiches erlaubt.

Diese Aufgabe wird erfindungsgemäß durch die im Kennzeichen des Patentanspruchs angegebenen Merkmale gelöst. Die Erfindung schafft einen Analogwertspeicher mit stetiger Veränderung der Verstellgeschwindigkeit seines Ausgangssignals. Eine stetige Veränderung der Verstellgeschwindigkeit ist bei großer Totzeit im Rückmeldekreis eines Stellgliedes besser beherrschbar als das Umschalten zwischen zwei verschieden großen fest eingestellten Verstellgeschwindigkeiten.

Die Erfindung wird im folgenden mit ihren weiteren Einzelheiten anhand eines in den Zeichnungen dargestellten Ausführungsbeispiels näher erläutert. Es zeigt

Figur 1 das Blockschaltbild eines Stellungsreglers mit einem Analogwertspeicher für den Stellungssollwert und

Figur 2 das Prinzipschaltbild des erfindungsgemäßen Analogwertspeichers.

Gleiche Bauelemente sind mit den gleichen Bezugszeichens versehen.

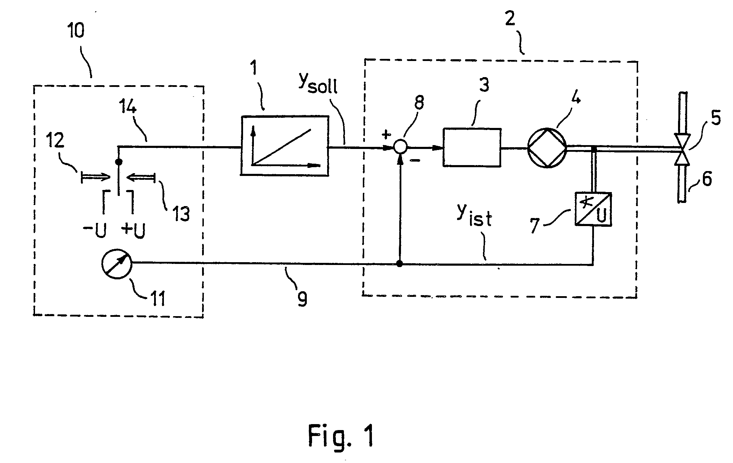

Die Figur 1 zeigt das Blockschaltbild eines Stellungsreglers mit einem integrierenden Analogwertspeicher für den Stellungssollwert. Das Ausgangssignal eines Analogwertspeichers 1 ist dem Eingang eines Stellungsreglers 2 als Stellungssollwert $y_{soll}$ zugeführt. Eine Steuerelektronik 3 steuert einen Stellmotor 4 an. Der Stellmotor 4 vestellt ein Ventil 5 in einer Leitung 6. Ein Winkelmeßumformer 7 formt die Stellung der Welle des Motors 4 in ein proportionales Ausgangssignal um, das als Stellungsistwert $y_{ist}$ dient. Ein Summationsglied 8 bildet die Differenz zwischen dem Stellungssollwert $y_{soll}$ und dem Stellungsistwert $y_{ist}$. Das Differenzsignal $y_{soll}$ -$y_{ist}$ ist der Steuerelektronik 3 für den Stellmotor 4 als Eingangssignal zugeführt. Der Stellungsregler 2 führt den Stellungsistwert $y_{ist}$ dem Stellungssollwert $y_{soll}$ nach. Der Stellungsistwert $y_{ist}$ wird über eine Leitung 9 in eine Warte 10 geführt und dort auf einem Instrument 11 angezeigt. In der Warte 10 befindet sich eine Steuereinrichtung mit zwei Steuertasten 12 und 13. Bei Betätigung der Steuertaste 12 ist der Eingang des Analogwertspeichers 1 über eine Leitung 14 mit einer positiven Spannung +U verbunden. Bei Betätigung der Steuertaste 13 ist der Eingang des Analogwertspeichers 1 über die Leitung 14 mit einer negativen Spannung -U verbunden. Um das Ventil 5 zu. verstellen, wird je nach der gewünschten Richtung eine der beiden Steuertasten 12 oder 13 so lange gedrückt, bis der an dem Instrument 11 angezeigte Stellungsistwert $y_{ist}$ den gewünschten Wert erreicht hat.

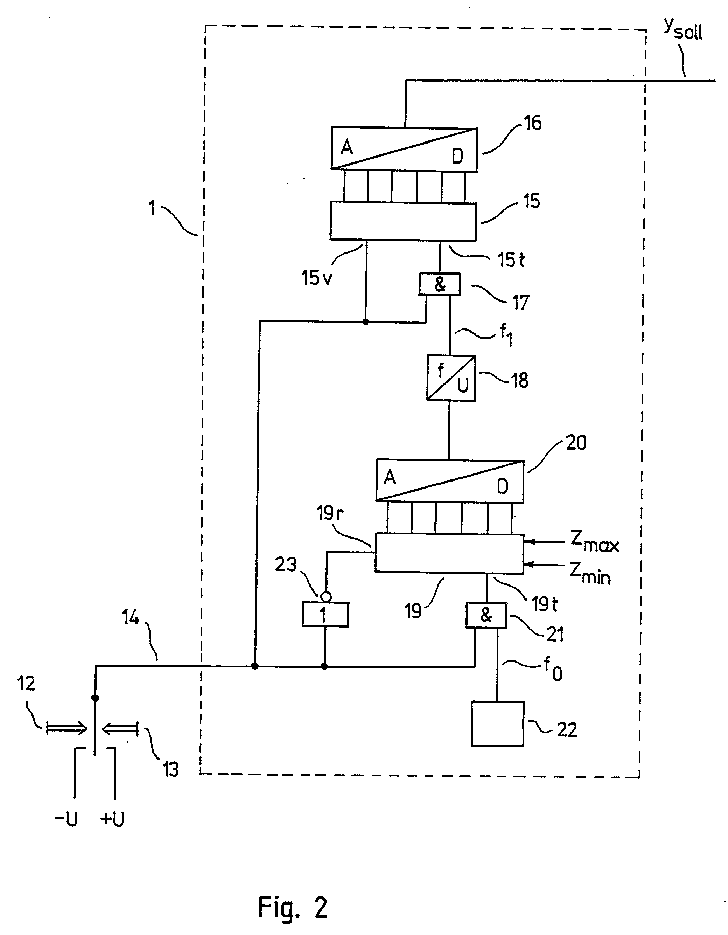

Die Figur 2 zeigt den Aufbau des erfindungsgemäßen Analogwertspeichers anhand eines Prinzipschaltbildes. Einem Vorwärts-Rückwärts-Zähler 15 ist ein Digital-Analog-Wandler 16 nachgeschaltet, der den Stand des Vorwärts-Rückwärts-Zählers 15 in ein analoges Ausgangssignal $y_{soll}$ umwandelt. Der Vorwärts-Rückwärts-Zähler 15 besitzt einen Vorzeicheneingang 15v und einen Takteingang ·15t. Der Takteingang 15t des Vorwärts-Rückwärts-Zählers 15 ist mit dem Ausgang eines UND-Elementes 17 verbunden. Der eine Eingang des UND-Elementes 17 ist mit dem Ausgang eines Spannungs-Frequenz-Wandlers 18 verbunden. Dem Spannungs-Frequenz-Wandler 18 sind ein zweiter Zähler 19 und ein zweiter Digital-Analog-Wandler 20 vorgeschaltet. Der Digital-Analog-Wandler 20 wandelt den Zählerstand des Zählers 19 in eine diesem proportionale Spannung um. Diese Spannung wandelt der Spannungs-Frequenz-Wandler 18 in eine proportionale Frequenz $f_1$ um. Die Frequenz $f_1$ ist die Zählfrequenz für den Vorwärts-Rückwärts-Zähler 15. Der Vorwärts-Rückwärts-Zähler 15 zählt entsprechend dem Vorzeichen der seinem Vorzeicheneingang 15v zugeführten Spannung mit der Zählfrequenz $f_1$ zwischen einem festen Anfangswert und einem festen Maximalwert. Durch interne Verriegelungen ist dafür gesorgt, daß der Zählerstand beim Vorwärtszählen nach dem Erreichen des Maximalwertes auch beim Eintreffen weiterer Zählimpulse auf diesen festgehalten wird und in entsprechender Weise beim Rückwärtszählen nach dem Erreichen des Anfangswertes auch beim Eintreffen weiterer Zählimpulse auf diesem festgehalten wird. Der Zähler 19 besitzt einen Takteingang 19t und einen Rücksetzeingang 19r. Der Takteingang 19t des Zählers 19 ist mit dem Ausgang eines weiteren UND-Elementes 21 verbunden. Der eine Eingang des UND-Elementes 21 ist mit dem Ausgang eines Taktgebers 22 verbunden, der eine feste Frequenz $f_0$ abgibt. Die Frequenz $f_0$ ist die Zählfrequenz für den Zähler 19. Dem Rücksetzeingang 19r des Zählers 19 ist ein NICHT-Element 23 vorgeschaltet. Der Zähler 19 ist auf einen vorgebbaren Anfangswert $Z_{min}$ zurückgesetzt, so lange dem Eingang des NICHT-Elementes 23 das Signal Null zugeführt ist. Ist eine der beiden Steuertasten 12 oder 13 betätigt, so zählt der Zähler 19 mit der Zählfrequenz $f_0$ von dem Anfangswert $Z_{min}$ aus

vorwärts bis er einen vorgebbaren Maximalwert $Z_{max}$ erreicht hat. Weitere Zählimpulse erhöhen den Zählerstand nicht mehr weiter.

Ist keine der beiden Steuertasten 12 und 13 betätigt, so steht auf der Leitung 14 das Signal Null an. Dieses Signal verhindert, daß die Zählfrequenz $f_0$ über das UND-Element 21 dem Takteingang 19t des Zählers 19 zugeführt wird und daß die Zählfrequenz $f_1$ über das UND-Element 17 dem Takteingang 15t des Vorwärts-Rückwärts-Zählers 15 zugeführt wird. Solange das Signal Null auf der Leitung 14 ansteht, ist der Zähler 19 auf seinen Anfangswert $Z_{min}$ zurückgesetzt.

Bei einer Betätigung der Steuertaste 12 wird dem Vorzeicheneingang 15v des Vorwärts-Rückwärts-Zählers 15 ein positives Spannungssignal +U zugeführt, und der Zählerstand des Vorwärts-Rückwärts-Zählers 15 erhöht sich entsprechend der Zählfrequenz $f_1$. Gleichzeitig erfolgt die Freigabe des Zählers 19. Der Zählerstand des Zählers 19 erhöht sich ausgehend von dem Anfangswert $Z_{min}$ entsprechend der festen Zählfrequenz $f_0$, die dem Takteingang 19t des Zählers 19 zugeführt ist. Die Zählfrequenz $f_1$ ist im Gegensatz zu der Zählfrequenz $f_0$ variabel. Die Zählfrequenz $f_1$ ist proportional zu dem Zählerstand des Zählers 19. Dabei entspricht dem Zählerstand $Z_{min}$ die Zählfrequenz $f_{1min}$ und dem Zählerstand $Z_{max}$ die Zählfrequenz $f_{1max}$. Die Zählfrequenz $f_{1min}$ ist so gewählt, daß sich eine für eine genaue Positionierung vorteilhafte langsame Verstellgeschwindigkeit für das Ausgangs signal $y_{soll}$ des Analogwertspeichers 1 ergibt. Bei dieser langsamen Verstellgeschwindigkeit würde sich für das Durchlaufen des Stellbereichs von 0 bis 100 % z. B. eine Stellzeit von 300 s ergeben. Die Zählfrequenz $f_{1max}$ ist so gewählt, daß sich eine für große Verstellungen vorteilhafte schnelle Verstellgeschwindigkeit für das Ausgangssignal $y_{soll}$ des Analogwertspeichers 1 ergibt. Bei dieser schnellen Verstellgeschwindigkeit würde sich für das Durchlaufen des gesamten Stellbereichs von 0 bis 100 % in dem angenommenen Beispiel eine Stellzeit von nur 10 s ergeben. In dem angenommenen Beispiel verringert sich die Stellzeit für das Durchlaufen des gesamten Stellbereichs in jeder Sekunde um 50 s, d. h. 5,8 s nach der Betätigung einer Steuertaste erfolgt die Verstellung des Ausgangssignals $y_{soll}$ des Analogwertspeichers 1 mit der schnellsten Verstellgeschwindigkeit entsprechend der Zählfrequenz $f_{1max}$.

Wird die Steuertaste 12 nicht mehr betätigt, ist aufgrund des den UND-Elementen 17 und 21 zugeführten Null-Signals die weitere Zufuhr von Zählimpulsen zu den Takteingängen des Vorwärts-Rückwärts-Zählers 15 und des Zählers 19 unterbrochen. Der Zählerstand des Vorwärts-Rückwärts-Zählers 15 bleibt bis zur Zufuhr weiterer Zählimpulse aufgrund einer erneuten Betätigung der Steuertasten 12 oder 13 erhalten. Der Zähler 19 wird dagegen durch das dem Eingang des NICHT-Elementes 23 zugeführten Null-Signals auf seinen Anfangswert $Z_{min}$ zurückgesetzt. Entsprechend nimmt die Zählfrequenz $f_1$ am Ausgang des Spannungs-Frequenz-Wandlers 18 den Wert $f_{1min}$ an.

Bei einer Betätigung der Steuertaste 13 wird dem Vorzeicheneingang 15v des Vorwärts-Rückwärts-Zählers 15 ein negatives Spannungssignal -U zugeführt und der Zählerstand des Vorwärts-Rückwärts-Zählers 15 verringert sich von seinem alten Wert entsprechend der Zählfrequenz $f_1$. Der Zähler 19 wird gleichzeitig freigegeben und erhöht - wie oben beschrieben - die Zählfrequenz von dem Anfangswert $f_{1min}$ bis zum Endwert $f_{1max}$.

Die Erfindung erlaubt es, das Ausgangssignal des Analogwertspeichers durch kurzzeitige Betätigung der Steuertasten mit langsamer Verstellgeschwindigkeit genau zu verstellen oder durch längere Betätigung der Steuertasten mit sich bis zur maximalen Verstellgeschwindigkeit steigernder Verstellgeschwindigkeit in großen Bereichen zu verstellen. Für eine große Verstellung ist die entsprechende Steuertaste daher zunächst so lange zu betätigen, bis der gewünschte Wert nahezu erreicht ist, und daran anschließend kurzzeitig, bis der gewünschte Wert exakt erreicht ist. Damit ist die Möglichkeit für eine sehr exakte Verstellung geschaffen, die aber nicht eine schnelle Verstellung des Ausgangssignals des Analogwertspeichers über große Bereiche beeinträchtigt.

## Ansprüche

Analogwertspeicher mit einem Vorwärts-Rückwärts-Zähler und einem diesem nachgeschalteten Digital-Analog-Wandler, dessen Ausgangssignal das Ausgangssignal des Analogwertspeichers ist, bei dem dem Vorwärts-Rückwärts-Zähler bei Betätigung von Handsteuertasten für die Verstellung des Ausgangssignals des Analogwertspeichers ein Vorzeichensignal für die Zählrichtung und eine Taktfrequenz für die Zählgeschwindigkeit zugeführt sind, dadurch gekennzeichnet,
- daß ein zweiter Zähler (19) vorgesehen ist, dessen Zähleingang (19t) bei Betätigung einer Steuertaste (12, 13) Impulse einer festen Frequenz ($f_0$) zugeführt sind, die den zweiten Zähler (19) von einem Anfangswert ($Z_{min}$) bis zu einem Maximalwert ($Z_{max}$) hochzählen,
- daß der Stand des zweiten Zählers (19) ein Maß für die Verstellgeschwindigkeit des Vorwärts-Rückwärts-Zählers (15) ist und
- daß der zweite Zähler (19) bei Nichtbetätigung der Handsteuertasten (12, 13) auf seinen Anfangswert ($Z_{min}$) zurückgesetzt ist.

Fig. 1

Fig. 2